# EUROPEAN PATENT APPLICATION

(11) **EP 4 472 158 A1**
(43) Date of publication of application: **04.12.2024**
(21) Application number: 23765702.8
(22) Date of filing: 08.02.2023
(51) Int. Cl.: H04L 41/12

(54) **MULTI-STATION CASCADE SYSTEM, CALLING METHOD AND RELATED DEVICE**

(30) Priority: 11.03.2022 CN 202210243477
(71) Applicant: Huawei Cloud Computing Technologies Co., Ltd., Guiyang, Guizhou 550025 (CN)
(72) Inventor: HUANG, Shulin, Guiyang, Guizhou 550025 (CN)
(74) Representative: Körber, Martin Hans
(86) International application number: PCT/CN2023/075015
(87) International publication number: WO 2023/169124

(57) **Abstract**

This application provides a multi-site cascading system, an invocation method, and a related apparatus. The system includes a first site and a second site, where the first site is configured to receive, through a dedicated channel between the first site and the second site, an invocation request sent by the second site, and the invocation request indicates to invoke one or both of a first microservice and an application programming interface API in the first site; the first site is further configured to invoke the one or both of the first microservice and the API based on the invocation request; and the first site is further configured to send an invocation request response to the second site through the dedicated channel. According to the multi-site cascading system provided in this application, sites communicate with each other through a dedicated channel, so that network security and data security are high.

## Description

This application claims priority to Chinese Patent Application No. 2022102434777, filed with the China National Intellectual Property Administration on March 11, 2022 and entitled "MULTI-SITE CASCADING SYSTEM, INVOCATION METHOD, AND RELATED APPARATUS", which is incorporated herein by reference in its entirety.

### TECHNICAL FIELD

This application relates to the field of communication technologies, and in particular, to a multi-site cascading system, an invocation method, and a related apparatus.

### BACKGROUND

The internet of things, that is, the "internet of connected things", is a new generation of information technology developed with the internet.

An internet of things system involves a plurality of sites. Generally, data synchronization or application programming interface (application programming interface, API) invocation needs to be performed between sites in the internet of things system. Data synchronization or API invocation between different sites needs to be performed through a public network or a private network, and an invoked party or a synchronized party needs to open a public internet protocol (internet protocol, IP) address and a port. Consequently, the port of the invoked party or the synchronized party needs to be exposed externally, resulting in poor security, vulnerability to an attack, and data leakage.

### SUMMARY

This application provides a multi-site cascading system, an invocation method, and a related apparatus. Dedicated channels are established between a plurality of sites in the multi-site cascading system. Each site has a dedicated identifier. The plurality of sites communicate with each other by using dedicated identifiers and through the dedicated channels. This ensures network security and avoids data leakage.

According to a first aspect, this application provides a multi-site cascading system. The multi-site cascading system includes a first site and a second site, where
the first site is configured to receive, through a dedicated channel between the first site and the second site, an invocation request sent by the second site, and the invocation request indicates that one or both of a first microservice and an application programming interface API in the first site need to be invoked;
the first site is further configured to invoke the one or both of the first microservice and the API based on the invocation request; and
the first site is further configured to send an invocation request response to the second site through the dedicated channel.

It may be learned that the dedicated channel is established between the first site and the second site in the multi-site cascading system provided in this application, and the first site communicates with the second site through the dedicated channel. For example, the second site invokes a specific API or a specific microservice in the first site through the dedicated channel instead of a public network, so that a port in the first site does not need to be opened to the outside. This ensures network security and security of data in the site.

Based on the first aspect, in a possible implementation, the invocation request includes one or both of a first microservice identifier and an API identifier, and a first site identifier, and the first microservice identifier, the API identifier, and the first site identifier are all dedicated identifiers in the multi-site cascading system.

It may be learned that in the multi-site cascading system, a site has a site identifier, and a microservice or an API in the site also has a dedicated identifier. Operation, management, maintenance, or the like of each site is easily implemented by using each identifier.

Based on the first aspect, in a possible implementation, the invocation request includes a uniform resource locator URL and the URL indicates the first microservice or the API in the first site.

It may be understood that the second site may further send the URL to the first site through the dedicated channel between the first site and the second site. The URL indicates the first microservice or the API in the first site. The first site directly invokes the first microservice or the API based on the URL. This ensures network security and data security and facilitates operations.

Based on the first aspect, in a possible implementation, the multi-site cascading system further includes a third site;
the first site is further configured to receive, through a dedicated channel between the first site and the third site, a data synchronization request sent by the third site and the data synchronization request includes to-be-synchronized data, a second microservice identifier, and the first site identifier; and
the first site is further configured to synchronize the to-be-synchronized data based on the second microservice identifier, and the second microservice identifier is a dedicated identifier in the multi-site cascading system.

It may be learned that the dedicated channel is established between the first site and the third site, and the first site may implement data synchronization with the third site through the dedicated channel. This ensures network security and data security. In the multi-site cascading management system, a plurality of sites communicate with each other by using site identifiers and microservice identifiers, facilitating management, operation, and maintenance of the entire system.

Based on the first aspect, in a possible implementation, the multi-site cascading system further includes a cascading management platform, and the dedicated channel between the first site and the second site and/or the dedicated channel between the first site and the third site are/is established according to an indication of the cascading management platform.

It may be understood that the multi-site cascading system further includes the cascading management platform, and the cascading management platform is configured to indicate to establish dedicated channels between the plurality of sites.

Based on the first aspect, in a possible implementation, the first site, the second site, the third site, and the cascading management platform are located in a same cloud data center or a plurality of cloud data centers; and when the first site, the second site, the third site, and the cascading management platform are located in the plurality of cloud data centers, one or any combination of the first site, the second site, the third site, and the cascading management platform is disposed in one of the plurality of cloud data centers.

According to a second aspect, this application provides an invocation method, including:
a first site receives, through a dedicated channel between the first site and a second site, an invocation request sent by the second site, where the invocation request indicates that one or both of a microservice and an application programming interface API in the first site need to be invoked, and both the first site and the second site belong to a multi-site cascading system;
the first site invokes the one or both of the microservice and the API based on the invocation request; and
the first site sends an invocation request response to the second site through the dedicated channel.

It may be learned that, in the multi-site cascading system, a plurality of sites may communicate with each other through dedicated channels, so that a port of an invoked-party site does not need to be opened to the outside. This ensures communication network security and data security.

Based on the second aspect, in a possible implementation, the invocation request includes one or both of a microservice identifier and an API identifier, and a first site identifier, and the microservice identifier, the API identifier, and the first site identifier are all dedicated identifiers in the multi-site cascading system.

Based on the second aspect, in a possible implementation, the invocation request includes a uniform resource locator URL and the URL indicates the microservice or the API in the first site.

Based on the second aspect, in a possible implementation, the multi-site cascading system includes a cascading management platform and the dedicated channel is established according to an indication of the cascading management platform.

Based on the second aspect, in a possible implementation, the first site, the second site, and the cascading management platform are located in a same cloud data center or a plurality of cloud data centers; and when the first site, the second site, and the cascading management platform are located in the plurality of cloud data centers, one or any combination of the first site, the second site, and the cascading management platform is disposed in one of the plurality of cloud data centers.

According to a third aspect, this application further provides an invocation method, including:
a first site receives, through a dedicated channel between the first site and a second site, a data synchronization request sent by the second site, where the data synchronization request includes to-be-synchronized data, a microservice identifier, and a first site identifier and both the first site and the second site belong to a multi-site cascading system; and
the first site synchronizes the to-be-synchronized data based on the microservice identifier, where both the microservice identifier and the first site identifier are dedicated identifiers in the multi-site cascading system.

Based on the third aspect, in a possible implementation, the multi-site cascading system includes a cascading management platform and the dedicated channel is established according to an indication of the cascading management platform.

Based on the third aspect, in a possible implementation, the first site, the second site, and the cascading management platform are located in a same cloud data center or a plurality of cloud data centers; and when the first site, the second site, and the cascading management platform are located in the plurality of cloud data centers, one or any combination of the first site, the second site, and the cascading management platform is disposed in one of the plurality of cloud data centers.

According to a fourth aspect, this application provides an invocation apparatus, including:
a communication module, configured to receive, through a dedicated channel between a first site and a second site, an invocation request sent by the second site, where the invocation request indicates that one or both of a microservice and an application programming interface API in the first site need to be invoked, and both the first site and the second site belong to a multi-site cascading system;
an invocation module, configured to invoke the one or both of the microservice and the API based on the invocation request; and
the communication module, further configured to send an invocation request response to the second site through the dedicated channel.

Based on the fourth aspect, in a possible implementation, the invocation request includes one or both of a microservice identifier and an API identifier, and a first site identifier, and the microservice identifier, the API identifier, and the first site identifier are all dedicated identifiers in the multi-site cascading system.

Based on the fourth aspect, in a possible implementation, the invocation request includes a uniform resource locator URL and the URL indicates the microservice or the API in the first site.

Based on the fourth aspect, in a possible implementation, the multi-site cascading system includes a cascading management platform and the dedicated channel is established according to an indication of the cascading management platform.

Each function module is configured to implement the method described in the second aspect or any possible implementation of the second aspect.

According to a fifth aspect, this application provides an invocation apparatus, including:
a communication module, configured to receive, through a dedicated channel between a first site and a second site, a data synchronization request sent by the second site where the data synchronization request includes to-be-synchronized data, a microservice identifier, and a first site identifier, and both the first site and the second site belong to a multi-site cascading system; and
an invocation module, configured to synchronize the to-be-synchronized data based on the microservice identifier, where both the microservice identifier and the first site identifier are dedicated identifiers in the multi-site cascading system.

Based on the fifth aspect, in a possible implementation, the multi-site cascading system includes a cascading management platform and the dedicated channel is established according to an indication of the cascading management platform.

Each function module is configured to implement the method described in the third aspect or any possible implementation of the third aspect.

According to a sixth aspect, this application provides an invocation device, including a memory and a processor, where the memory is configured to store instructions and the processor is configured to execute the instructions in the memory, so that the invocation device performs the method according to the second aspect or any possible implementation of the second aspect.

According to a seventh aspect, this application provides an invocation device, including a memory and a processor, where the memory is configured to store instructions and the processor is configured to execute the instructions in the memory, so that the invocation device performs the method according to the third aspect or any possible implementation of the third aspect.

According to an eighth aspect, this application provides a readable storage medium, including program instructions and when the program instructions are executed by a processor, the processor is enabled to perform the method according to the second aspect or any possible implementation of the second aspect.

According to a ninth aspect, this application provides a readable storage medium, including program instructions and when the program instructions are executed by a processor, the processor is enabled to perform the method according to the third aspect or any possible implementation of the third aspect.

### BRIEF DESCRIPTION OF DRAWINGS

FIG. 1 is a diagram of a scenario according to this application;
FIG. 2 is a diagram of an architecture of a multi-site cascading system according to this application;
FIG. 3 is a diagram of an example of a scenario according to this application;
FIG. 4 is a schematic flowchart of an invocation method according to this application;
FIG. 5 is a diagram of an example of an invocation method according to this application;
FIG. 6 is a schematic flowchart of another invocation method according to this application;
FIG. 7 is a diagram of an example of another invocation method according to this application;
FIG. 8 is a diagram of a structure of an apparatus of a cascading management platform according to this application;
FIG. 9 is a diagram of a structure of an apparatus of a site according to this application; and
FIG. 10 is a diagram of a structure of hardware according to this application.

### DESCRIPTION OF EMBODIMENTS

In this application, for ease of description and understanding, "first", "second", "third", or the like is used for differentiation. "First", "second", or "third" has no substantive meaning, and is not intended for specific reference.

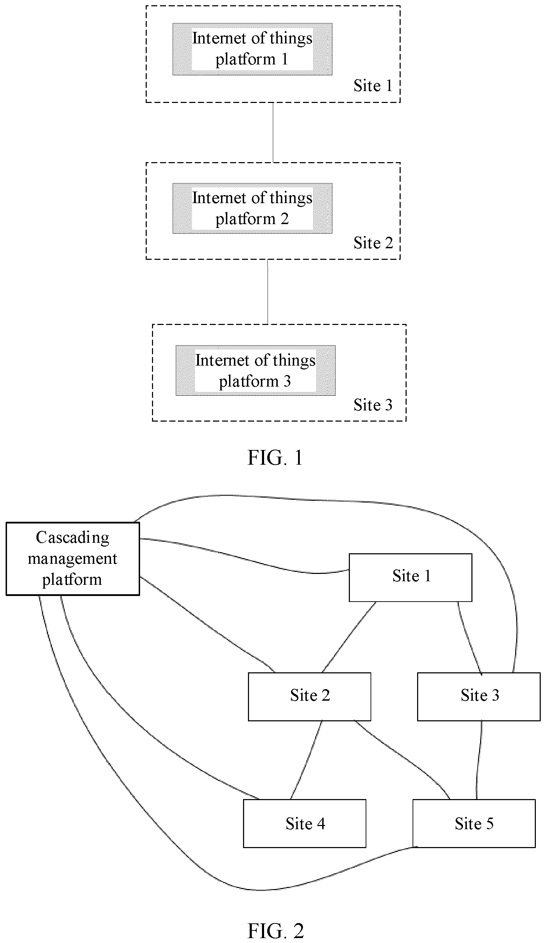

FIG. 1 is a diagram of a scenario according to this application. An internet of things system shown in FIG. 1 includes a site 1, a site 2, and a site 3. An internet of things platform 1 is installed in the site 1, an internet of things platform 2 is installed in the site 2, and an internet of things platform 3 is installed in the site 3.

Internet of things platforms establish point-to-point communication by using IP addresses. For example, when the internet of things platform 3 needs to communicate with the internet of things platform 2, an IP address of the internet of things platform 2 needs to be configured first, and then the internet of things platform 3 communicates with the internet of things platform 2 by using the IP address. When the internet of things platform 2 needs to communicate with the internet of things platform 1, an IP address of the internet of things platform 1 needs to be configured first, and then the internet of things platform 2 communicates with the internet of things platform 1 by using the IP address.

During communication between internet of things platforms, one of the internet of things platforms needs to open a public IP address and a communication port. For example, when the internet of things platform 3 needs to synchronize data with the internet of things platform 2, the internet of things platform 2 needs to open a public IP address and a data synchronization port, and the internet of things platform 3 sends the to-be-synchronized data to the internet of things platform 2 based on the IP address and the data synchronization port through a public network or a dedicated network. This implements data synchronization between the internet of things platform 3 and the internet of things platform 2. For another example, when the internet of things platform 3 needs to invoke an API on the internet of things platform 2, the internet of things platform 2 needs to open the public IP address and the API to the outside, and the internet of things platform 3 invokes the API on the internet of things platform 2 based on the public IP address through a public network or a dedicated network.

The foregoing communication process has the following defects. A public IP address and a port of an invoked party/a synchronized party need to be exposed externally, and consequently security is poor, the internet of things platform is vulnerable to an attack, and data is easily leaked. In addition, the point-to-point communication between the internet of things platforms can be implemented only by configuring the IP addresses, and the internet of things platforms need to be configured one by one in the entire internet of things system, resulting in inconvenient operation and maintenance management.

This application provides a multi-site cascading system. FIG. 2 is a diagram of an architecture of a multi-site cascading system according to this application. In FIG. 2, the multi-site cascading system includes a cascading management platform, a site 1, a site 2, a site 3, a site 4, and a site 5. Herein, only the site 1, the site 2, the site 3, the site 4, and the site 5 are used as examples for description. In actual application, more or fewer sites may be included.

A signaling channel is established between the cascading management platform and each site. For example, a signaling channel 1 is established between the cascading management platform and the site 1, a signaling channel 2 is established between the cascading management platform and the site 2, a signaling channel 3 is established between the cascading management platform and the site 3, a signaling channel 4 is established between the cascading management platform and the site 4, and a signaling channel 5 is established between the cascading management platform and the site 5. In FIG. 2, a connection line between the cascading management platform and each site may represent the signaling channel. The cascading management platform sends signaling or instructions to the site through the signaling channel.

Optionally, a data channel may be further established between the cascading management platform and each site. For example, a data channel 1 is established between the cascading management platform and the site 1, a data channel 2 is established between the cascading management platform and the site 2, a data channel 3 is established between the cascading management platform and the site 3, a data channel 4 is established between the cascading management platform and the site 4, and a data channel 5 is established between the cascading management platform and the site 5. In FIG. 2, a connection line between the cascading management platform and each site may further represent the data channel. In other words, two channels may be established between the cascading management platform and each site, and one is the signaling channel and the other is the data channel. For ease of drawing, in FIG. 2, only one connection line is drawn between the cascading management platform and each site. Each site can upload data to the cascading management platform through the data channel between the site and the cascading management platform.

Data channels are established between a plurality of sites. For example, in an example in FIG. 2, a data channel is established between the site 1 and the site 2, and between the site 1 and the site 3, a data channel is established between the site 2 and the site 4, and between the site 2 and the site 5, and a data channel is established between the site 3 and the site 5. Optionally, in actual application, the data channel between the sites may be established based on a specific application scenario and according to a specific requirement. For example, in a scenario shown in FIG. 2, no data channel is established between the site 4 and the site 1, and between the site 5 and the site 1. In another possible scenario, a data channel may be established between the site 4 and the site 1, and between the site 5 and the site 1. Alternatively, in another possible scenario, a data channel may be established between the site 4 and the site 3. Alternatively, in another possible scenario, a channel may be established between the site 2 and the site 3, between the site 4 and the site 5, or the like. This is not limited in this application.

The data channel between the sites is used for data communication between the sites. The data communication may be, for example, data synchronization or API invocation. For example, to implement the data synchronization between the site 4 and the site 2, the data channel between the site 4 and the site 2 is required. To implement the data synchronization between the site 4 and the site 1, the data synchronization between the site 4 and the site 2 is implemented through the data channel between the site 4 and the site 2 first, and then the data synchronization between the site 2 and the site 1 is implemented through the data channel between the site 2 and the site 1. In a possible scenario, if a data channel is alternatively established between the site 4 and the site 1, the data synchronization between the site 4 and the site 1 may be directly implemented through the data channel between the site 4 and the site 1. The API invocation is similar to the data synchronization. The API invocation of the corresponding site needs to be implemented through the data channel between the sites.

The following uses the site 2 as an example to describe a general process of establishing the signaling channel and the data channel between each site and the cascading management platform and the data channel between the site and another site.

Information about the site 2 is added to the cascading management platform, and then the cascading management platform sends an authentication credential to the site 2. The authentication credential includes a data channel identifier or a data channel password between the cascading management platform and the site 2, or the like. Optionally, the authentication credential further includes a signaling channel identifier or a signaling channel password between the cascading management platform and the site 2, or the like. The cascading management platform further configures an upper-level/a lower-level relationship between the site 2 and the another site that completes registration on the cascading management platform, a data channel identifier or a data channel password between the site 2 and the upper-level/lower-level site, and a security policy, a traffic control policy, a routing policy, or the like of the site 2, and sends configuration information to the site 2. The site 2 receives the authentication credential and the configuration information, configures the security policy, the traffic control policy, the routing policy, or the like of the site 2 based on the configuration information, and establishes the signaling channel and the data channel between the site 2 and the cascading management platform, and the data channel between the site 2 and the upper-level/lower-level site based on the authentication credential and the configuration information. The traffic control policy means a policy related to controlling traffic for accessing the site, or the like. For the routing policy, some policies may be implemented according to an actual networking requirement to filter routing information or change an attribute of routing information. For example, when the site receives a plurality of access requests, a priority policy may be set, and the plurality of access requests are processed in sequence according to the priority policy. In actual application, the security policy, the traffic control policy, the routing policy, and the like may be specifically set by the cascading management platform based on a specific situation. This is not limited in this application.

In the example in FIG. 2, it may be understood that the site 1 is an upper level of the site 2 and the site 3, the site 2 is an upper level of the site 4 and the site 5, and the site 3 is an upper level of the site 5. The upper-level/lower level relationship is relative. For example, in the site 1 and the site 2, the site 2 is a lower level of the site 1, and in the site 2 and the site 4, the site 2 is the upper level of the site 4. In other words, the site 2 is the lower level relative to the site 1, and the site 2 is the upper level relative to the site 4. When the cascading management platform configures the upper-level/lower-level relationship of the site 2, if the site that has been registered on the cascading management platform includes the site 1 when the upper-level/lower-level relationship of the site 2 is configured, the site 1 is configured as the upper level of the site 2. Alternatively, if the site that has been registered on the cascading management platform includes the site 1, the site 3, the site 4, and the site 5 when the upper-level/lower-level relationship of the site 2 is configured, the site 1 is configured as the upper level of the site 2, and the site 4 and the site 5 are configured as lower levels of the site 2.

A process of establishing the signaling channel and the data channel between another site and the cascading management platform, and a process of establishing the data channel between the sites are similar.

A process of establishing the signaling channel and the data channel between the site 2 and the cascading management platform and a process of establishing the data channel between the site 2 and the another site are merely used as an example. The example is one of implementations. In actual application, there is another way to implement the process of establishing the signaling channel and the data channel between the site and the cascading management platform, and the process of establishing the data channel between the site and the another site. This is not limited in this application.

It should be noted that each data channel has an identifier of each data channel, and different data channels have different identifiers. When the site uploads data to the cascading management platform, or the site sends a data synchronization request or an API invocation request to the another site, the data channel may be determined based on the data channel identifier. The data channel password ensures security of use of the data channel. When the data channel is used to transmit data or a request, the data channel password needs to be confirmed. The data channel can be used to transmit the data or the request only when the data channel password is correct. Therefore, both the data channel between the cascading management platform and each site and the data channel between the sites are dedicated channels that are established according to an indication of the cascading management platform. The password is only one of the authentication manners, and there is another authentication manner. This is not limited in this application.

Optionally, each signaling channel also has an identifier of each signaling channel, and different signaling channels have different identifiers. Optionally, the signaling channel between the cascading management platform and each site is also the dedicated channel.

It should be noted that each site also has an identifier of each site, and different sites have different identifiers. After each site completes registration on the cascading management platform, the site locally stores a routing table. The routing table includes a mapping relationship between an upper-level site identifier, a data channel identifier between the local site and the upper-level site, a lower-level site identifier, and a data channel identifier between the local site and the lower-level site.

In this application, one or more service applications (apps) are installed in each site in the multi-site cascading system, and each service application includes one or more microservices or one or more modules. Some or all microservices or modules in some or all service applications may be opened to the outside and may be invoked by the another site. Therefore, it is necessary to set which microservices or modules in which service applications may be opened to the outside, and more specifically, which APIs in the microservice or module may be opened to the outside.

In an implementation, an identifier is allocated to each microservice or each module in each service application, in other words, each microservice or each module has the identifier of each microservice or each module, and the identifier of each microservice or each module is globally unique. It is set that which microservice identifiers or module identifiers may be opened to the outside, and/or, which APIs may be opened to the outside. Specifically, a list is set in each site, and the list includes a microservice identifier opened to the outside or a module identifier opened to the outside, an API opened to the outside, an API identifier opened to the outside, and/or the like. Optionally, the list that can be opened to the outside in each site may be set on the cascading management platform, and then the cascading management platform delivers the set list to the corresponding site.

Optionally, an internet of things platform may be further installed in each site, and the internet of things platform is configured to receive environmental data sent by a sensor by using a gateway. When the internet of things platform and the one or more service applications are installed in a site, the service application is used to obtain data from the internet of things platform, and analyze and process the data.

Optionally, after each site completes registration on the cascading management platform, the cascading management platform stores a service list. The service list includes information of opened to the outside of each site, and the service list includes a mapping between a site identifier opened to the outside, the microservice identifier or the module identifier opened to the outside, and the API or the API identifier opened to the outside. When the another site needs to invoke a specific microservice, a specific module, or a specific API, or when a specific site needs to synchronize data to the another site, one or more of the microservice identifier or the module identifier, the API identifier, and the site identifier in which the microservice is located may be obtained from the cascading management platform. Optionally, the cascading management platform further stores a uniform resource locator (uniform resource locator, URL) of a specific microservice, a specific module, or a specific API in a specific site. The service list further includes a mapping relationship between a site identifier open to the outside, the microservice identifier or the module identifier opened to the outside, the API or the API identifier opened to the outside, and a corresponding URL link.

In the multi-site cascading system shown in FIG. 2, the cascading management platform is further configured to collect log information, alarm information, remote access information, running status information of each device (for example, a server) in each site, or the like of each site, and perform operation and maintenance management on each site based on collected information. When collecting information about each site, the cascading management platform may use the signaling channel between the cascading management platform and each site, or may use the data channel between the cascading management platform and each site. This is not limited in this application.

In the multi-site cascading system shown in FIG. 2, the cascading management platform, the site 1, the site 2, the site 3, the site 4, and the site 5 may be located in a same cloud data center, or may be located in a plurality of cloud data centers. When the cascading management platform, the site 1, the site 2, the site 3, the site 4, and the site 5 are located in the plurality of cloud data centers, any one or any combination of the cascading management platform, the site 1, the site 2, the site 3, the site 4, and the site 5 may be located in a same cloud data center.

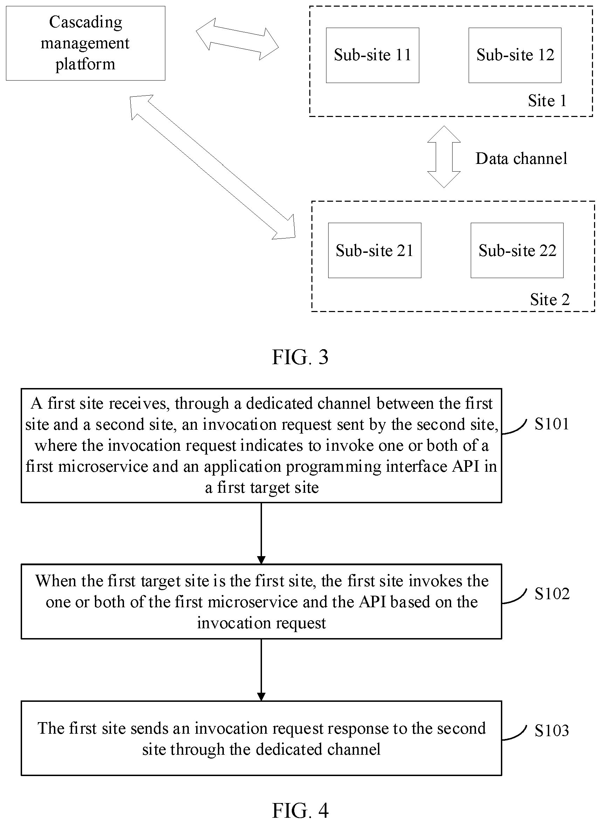

Optionally, in the multi-site cascading system shown in FIG. 2, each site may include a plurality of sub-sites, the plurality of sub-sites of one site are located in a same cloud data center, and the plurality of sub-sites of the site share a data channel and a signaling channel. For example, FIG. 3 is a diagram of an example of a scenario according to this application. In FIG. 3, the site 1 includes a sub-site 11 and a sub-site 12, and the site 2 includes a sub-site 21 and a sub-site 22. If the site 1 is located in a cloud data center A, and the site 2 is located in a cloud data center B, the sub-site 11 and the sub-site 12 are located in the cloud data center A, and the sub-site 21 and the sub-site 22 are located in the cloud data center B. When the sub-site 11 performs data communication with the sub-site 21, the sub-site 11 performs data communication with the sub-site 22, the sub-site 12 performs data communication with the sub-site 21, or the sub-site 12 performs data communication with the sub-site 22, the data channel between the site 1 and the site 2 is used. If the sub-site 11 communicates with the sub-site 21 and the sub-site 12 communicates with the sub-site 22 at the same time, route selection may be performed according to a routing policy configured in the site 1. When the cascading management platform communicates with the sub-site 11 or the sub-site 12, the signaling channel or the data channel established between the cascading management platform and the site 1 is used. For brevity of the figure, in FIG. 3, only one arrow is drawn between the cascading management platform and the site 1. However, in actual application, channels established between the cascading management platform and the site 1 include two channels: the signaling channel and the data channel. Similarly, the signaling channel and the data channel are also included between the cascading management platform and the site 2.

For another example, in an application scenario, a Shenzhen city site is used as one of the sites, including a factory A and a factory B. The factory A may be considered as a sub-site, the factory B may be considered as a sub-site, and the factory A and the factory B share a data channel and a signaling channel. Guangzhou city is used as another site. When the factory A (the sub-site) communicates with the Guangzhou city site, a data channel between the Shenzhen city site and the Guangzhou city site is used. When the factory B (the sub-site) communicates with the Guangzhou city site, the data channel between the Shenzhen city site and the Guangzhou city site is alternatively used. When the factory A and the factory B communicate with the Guangzhou city site at the same time, route selection may be performed according to a routing policy configured in the Shenzhen city site.

When the site includes the plurality of sub-sites, identifiers of the plurality of sub-sites of the site are different. For example, in FIG. 3, identifiers of the sub-site 11 and the sub-site 12 are different, and identifiers of the sub-site 21 and the sub-site 22 are different. Certainly, identifiers of the sub-site 11, the sub-site 12, the sub-site 21, and the sub-site 22 are different from each other. When the cascading management platform sends a request to the sub-site, or when the another site sends a request to the sub-site, the sub-site identifier is used in the request.

Based on the multi-site cascading system described in the example in FIG. 2, this application provides an invocation method. The invocation method is applicable between the sites. According to the invocation method provided in this application, when one site needs to invoke an API, a microservice, or a module in another site, different from invoking through a public network in a conventional method, this application invokes through a dedicated data channel established between sites, so that security is higher. Different from a conventional method in which point-to-point communication is implemented by configuring an IP address, in this application, each site has the site identifier, and a target site may be directly determined based on the site identifier. This is easy to operate, and facilitates management and maintenance.

FIG. 4 is a schematic flowchart of an invocation method according to this application. The method includes but is not limited to descriptions of the following content.

S 101: A first site receives, through a dedicated channel between the first site and a second site, an invocation request sent by the second site, where the invocation request indicates that one or both of a first microservice and an application programming interface API in a first target site need to be invoked.

Optionally, in an implementation, the invocation request includes one or both of a first microservice identifier and an API identifier, and a first target site identifier. The first microservice identifier indicates an invoked microservice, the API identifier indicates an invoked API, and the first target site identifier indicates a site in which the invoked microservice or API is located. That the invocation request includes the one or both of the first microservice identifier and the API identifier, and the first target site identifier may be understood as follows. In an example, if the invocation request includes the first microservice identifier and the first target site identifier, it indicates to invoke the first microservice in the first target site. In an example, if the invocation request includes the API identifier and the first target site identifier, it indicates that the API in the first target site needs to be invoked. In an example, if the invocation request includes the first microservice identifier, the API identifier, and the first target site identifier, it indicates that the API of the first microservice in the first target site needs to be invoked. In this case, the API belongs to the first microservice, and the first microservice is located in the first target site.

Optionally, the microservice herein may alternatively be understood as a module. When a service application in the site includes a plurality of microservices, the invocation request includes a microservice identifier. When a service application includes a plurality of modules, the invocation request includes a module identifier. Therefore, whether the invocation request includes the microservice identifier or the module identifier may be determined based on a specific setting.

Optionally, in another implementation, the invocation request includes a uniform resource locator URL and the URL indicates the first microservice or the API in the first target site. The URL is obtained by the second site from a cascading management platform.

The second site sends the invocation request to the first site through a data channel between the second site and the first site. Correspondingly, the first site receives, through the data channel between the first site and the second site, the invocation request sent by the second site.

Optionally, before the second site sends the invocation request to the first site, the second site generates the invocation request according to an application requirement. In a possible implementation, the second site may obtain, from the cascading management platform, the site identifier, and the microservice identifier, the module identifier or the API identifier that need to be invoked, and generate the invocation request. Then, the second site encapsulates the invocation request according to a remote procedure call (remote procedure call, RPC) protocol, encapsulates the invocation request into a packet in a specific format, and sends the packet to the first site through the dedicated data channel between the second site and the first site. A specific format of the packet defined in the RPC protocol is not limited in this application.

S102: When the first target site is the first site, the first site invokes the one or both of the first microservice and the API based on the invocation request.

S 103: The first site sends an invocation request response to the second site through the dedicated channel.

When the first target site identifier is a first site identifier, in other words, when the first target site is the first site, the first site invokes the one or both of the first microservice and the API based on the invocation request. In an implementation, if the invocation request includes the first microservice identifier, the first site invokes the first microservice based on the first microservice identifier, to obtain data; if the invocation request includes the API identifier, the first site invokes the API based on the API identifier, to obtain data; or if the invocation request includes the API identifier and the microservice identifier, the first site invokes the API based on the microservice identifier and the API identifier, to obtain data. The first site returns the invocation request response to the second site through the dedicated data channel between the first site and the second site, where the invocation request response includes the data obtained by the invocation operation.

In another implementation, if the invocation request includes the URL, the URL indicates the first microservice or the API in the first target site. When the first target site is the first site, the first site invokes the first microservice or the API based on the URL.

When the first target site identifier is not a first site identifier, in other words, when the first target site is not the first site, the first site may perform forwarding through the dedicated data channel. During forwarding, the first site may determine a next-hop site based on the first target site, and perform forwarding through a data channel between the first site and the next-hop site.

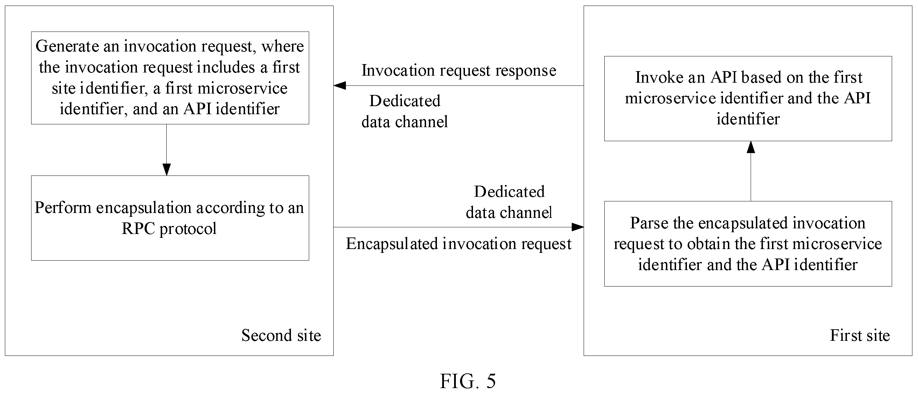

For ease of understanding, refer to a diagram shown in FIG. 5. The second site generates the invocation request, where the invocation request includes the first site identifier, the first microservice identifier, and the API identifier, then performs encapsulation according to the RPC protocol, and sends an encapsulated invocation request to the first site through the dedicated data channel between the second site and the first site. The first site parses the received encapsulated invocation request, invokes the API based on the first microservice identifier and the API identifier, and returns the invocation request response to the second site, where the invocation request response includes the data obtained through invocation.

Optionally, in this embodiment of this application, the first site may include a plurality of sub-sites, and the second site may also include a plurality of sub-sites. When any sub-site in the first site communicates with any sub-site in the second site, a sub-site identifier is used during communication, and the communication may be performed based on content described in steps S101 to S103. If there are a plurality of sub-sites in the second site to communicate with any one or more sub-sites in the first site at the same time, specific execution may be performed according to a specific configuration policy.

This application further provides an invocation method. The invocation method describes a method for synchronizing data between sites. In this application, when a site needs to synchronize data with another site, a data synchronization request is sent through a dedicated data channel between the two sites instead of a public network, so that security is higher. In addition, a target site is directly determined based on a site identifier, and an IP address of a synchronized party does not need to be configured. This is easy to operate, and facilitates management and maintenance.

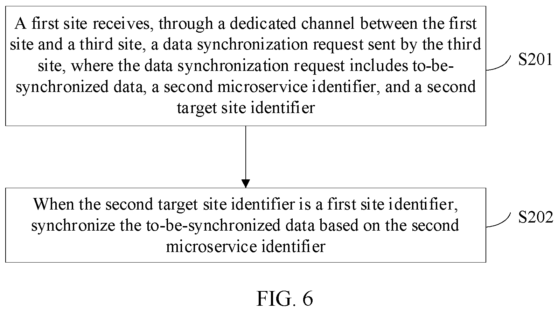

FIG. 6 is a schematic flowchart of another invocation method according to this application. The method includes but is not limited to descriptions of the following content.

S201: A first site receives, through a dedicated channel between the first site and a third site, a data synchronization request sent by the third site, where the data synchronization request includes to-be-synchronized data, a second microservice identifier, and a second target site identifier.

The second target site identifier indicates a site of synchronized data, and the second microservice identifier indicates a microservice that needs to be synchronized data or is referred to as a microservice of the synchronized data. A second microservice is located in a second target site, in other words, a party of the synchronized data is the second microservice in the second target site.

Optionally, the microservice herein may alternatively be understood as a module. When a service application in the site includes a plurality of microservices, the data synchronization request includes a microservice identifier. When a service application includes a plurality of modules, the data synchronization request includes a module identifier. Therefore, whether the microservice identifier or the module identifier is included in the data synchronization request may be determined based on a specific setting.

The third site sends the data synchronization request to the first site through a data channel between the third site and the first site. Correspondingly, the first site receives, through the data channel between the first site and the third site, the data synchronization request sent by the third site.

Optionally, before the third site sends the data synchronization request to the first site, the third site generates the data synchronization request according to an application requirement. In a possible implementation, the third site may obtain, from a cascading management platform, the site identifier, and the microservice identifier or the module identifier that need to be synchronized data, and generate the data synchronization request. Optionally, the third site encapsulates the data synchronization request according to a data synchronization protocol, encapsulates the data synchronization request into a packet in a specific format, and sends the packet to the first site. A specific format of the packet defined in the data synchronization protocol is not limited in this application.

S202: When the second target site identifier is a first site identifier, synchronize the to-be-synchronized data based on the second microservice identifier.

When the second target site identifier is the first site identifier, in other words, when the second target site is the first site, the to-be-synchronized data is synchronized to the microservice indicated by the second microservice identifier. Optionally, the first site sends a data synchronization request response to the third site, where the data synchronization request response indicates that data synchronization is completed.

When the second target site identifier is not the first site identifier, in other words, when the second target site is not the first site, the first site forwards the data synchronization request. During forwarding, the first site determines a next-hop site based on the second target site identifier, and performs forwarding through a data channel between the first site and the next-hop site.

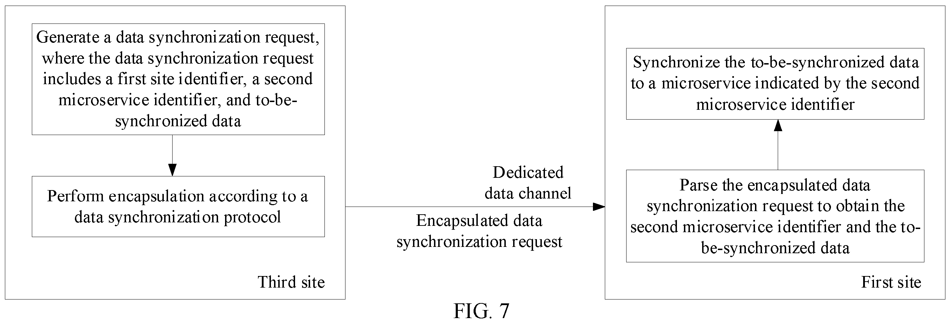

For ease of understanding, refer to a diagram shown in FIG. 7. The third site generates the data synchronization request, where the data synchronization request includes the to-be-synchronized data, the first site identifier, and the second microservice identifier, then performs encapsulation according to the data synchronization protocol, and sends an encapsulated invocation request to the first site through the dedicated data channel between the third site and the first site. The first site parses the received encapsulated data synchronization request, and synchronizes the to-be-synchronized data to the microservice indicated by the second microservice identifier.

Optionally, in this embodiment of this application, the first site may include a plurality of sub-sites, and the third site may also include a plurality of sub-sites. When any sub-site in the first site communicates with any sub-site in the third site, a sub-site identifier is used during communication, and the communication may be performed based on content described in steps S101 and S 102. If there are a plurality of sub-sites in the third site to communicate with any one or more sub-sites in the first site at the same time, specific execution may be performed according to a specific configuration policy.

It may be learned that this application provides a multi-site cascading system, including the cascading management platform and a plurality of sites. Dedicated channels are established between the cascading management platform and the site and between the sites. When microservice invocation, API invocation, or data synchronization is performed between the sites, the sites communicate with each other through the dedicated channel. This ensures network security and data security. In addition, each site in the system has a unique identifier, and the microservice, the module, or the API also has a unique identifier. The target site is determined by using the site identifier, and an object that needs to be invoked or an object that needs to be synchronized data is determined based on the microservice identifier or the module identifier, and the API identifier. This facilitates operation, management, and maintenance of the entire system.

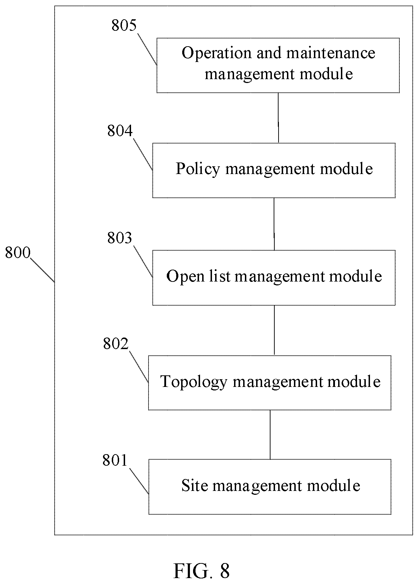

This application provides a diagram of a structure of a virtual apparatus of a cascading management platform 800. Refer to FIG. 8. The cascading management platform 800 may include a site management module 801, a topology management module 802, an open list management module 803, a policy management module 804, and an operation and maintenance management module 805.

The site management module 801 is configured to allocate an identifier and an authentication credential to each site, where the identifier is used for routing and addressing between sites, or used for routing and addressing when the cascading management platform 800 communicates with a site.

The topology management module 802 is configured to configure and manage an upper-level/lower-level relationship between sites. The site management module 801 is further configured to be responsible for issuing and authenticating identifiers and passwords of data channels between each site and an upper-level/a lower-level site.

The topology management module 802 is further configured to configure a data flow direction of each site, where the data flow direction includes a unidirectional flow direction and a bidirectional flow direction. Optionally, an upper-level/a lower-level relationship of each site may be managed and the data flow direction of each site may be configured in a visualized arrangement manner.

The open list management module 803 is configured to manage which service applications in each site may be opened to the outside, which microservices or modules in the service application may be opened to the outside, and which APIs in the microservice or the module may be opened to the outside.

The policy management module 804 is configured to configure a security policy, a traffic control policy, a routing policy, or the like of each site. The traffic control policy is, for example, of allowing how many sites to access one site at the same time. The routing policy is, for example, how to choose when one site is accessed by a plurality of sites at the same time.

The operation and maintenance management module 805 is configured to collect information about each site, for example, collect log information, alarm processing information, remote access information, or processor utilization of a site device (for example, a server) of each site. Optionally, visualized operation and maintenance management may be implemented based on a system network topology diagram.

Each functional module in the cascading management platform 800 is configured to implement a function of the cascading management platform in the system shown in FIG. 2, and is configured to implement the method related to the cascading management platform in the method embodiment shown in FIG. 4 or FIG. 6. For brevity of the specification, details are not described herein again.

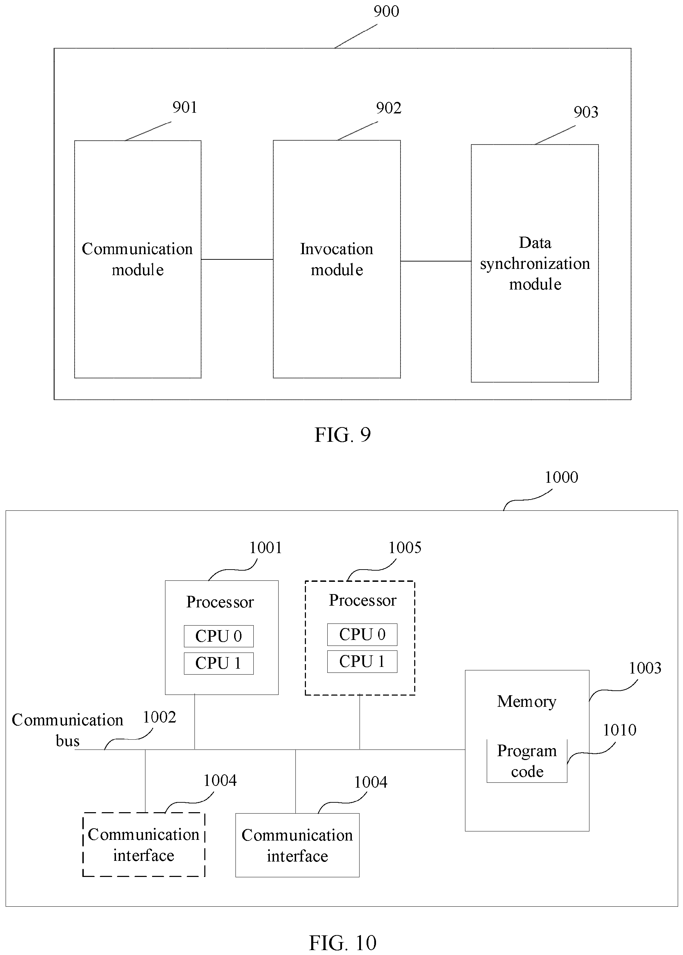

This application provides a diagram of a structure of a virtual apparatus of a site 900. Refer to FIG. 9. The site 900 may be configured as the first site in the method embodiment in FIG. 4 or FIG. 6, may be configured as the second site in the method embodiment in FIG. 4 or the third site in the method embodiment in FIG. 6, or may be configured as any sub-site of any site. The following describes a diagram of a structure of the apparatus by using an example in which the site 900 is configured as the first site. The site 900 includes:
a communication module 901, configured to receive, through the dedicated channel between the first site and the second site, the invocation request sent by the second site, where the invocation request indicates that the one or both of the first microservice and the application programming interface API in the first site need to be invoked, and both the first site and the second site belong to a multi-site cascading system;
an invocation module 902, configured to invoke the one or both of the first microservice and the API based on the invocation request; and
the communication module 901 is further configured to send the invocation request response to the second site through the dedicated channel.

In a possible implementation, the invocation request includes the one or both of the microservice identifier and the API identifier and the first site identifier, and the microservice identifier, the API identifier, and the first site identifier are all dedicated identifiers in the multi-site cascading system.

In a possible implementation, the invocation request includes the uniform resource locator URL and the URL indicates the microservice or the API in the first site.

The communication module 901 is further configured to receive, through the dedicated channel between the first site and the third site, the data synchronization request sent by the third site, where the data synchronization request includes the to-be-synchronized data, the second microservice identifier, and the second target site identifier. A data synchronization module 903 is configured to synchronize the to-be-synchronized data based on the second microservice identifier when the second target site identifier is the first site identifier, where the second microservice identifier is a dedicated identifier in the multi-site cascading system.

In a possible implementation, the dedicated channel between the first site and the second site and/or the dedicated channel between the first site and the third site are/is established according to an indication of the cascading management platform.

In a possible implementation, the first site, the second site, the third site, and the cascading management platform are located in a same cloud data center or a plurality of cloud data centers; and when the first site, the second site, the third site, and the cascading management platform are located in the plurality of cloud data centers, one or any combination of the first site, the second site, the third site, and the cascading management platform is disposed in one of the plurality of cloud data centers.

Each functional module in the site 900 is configured to implement the method embodiment in FIG. 4 or FIG. 6. For specific content, refer to descriptions of related content in the method embodiment in FIG. 4 or FIG. 6. For brevity of the specification, details are not described herein again.

This application provides a diagram of a structure of hardware 1000. Refer to FIG. 10. The structure of the hardware 1000 may be configured as any site, for example, a first site, a second site, or a third site, may be configured as any sub-site, or may be configured as a cascading management platform. The hardware 1000 includes at least one processor 1001, a communication bus 1002, a memory 1003, and at least one communication interface 1004.

The processor 1001 may be a general-purpose CPU, an NP, a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication bus 1002 is configured to transmit information between components. The communication bus 1002 may be classified into an address bus, a data bus, a control bus, or the like. For ease of representation, only one thick line is for representing the bus in FIG. 10, but this does not mean that there is only one bus or only one type of bus.

The memory 1003 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile optical disc, a Blu-ray disc, or the like), a magnetic disk storage medium or another magnetic storage device, or any other medium capable of carrying or storing program code in an instruction form or a data structure form and capable of being accessed by a computer. This is not limited thereto. The memory 1003 may exist independently, and is connected to the processor 1001 by using the communication bus 1002; or the memory 1003 may be integrated with the processor 1001.

The communication interface 1004 is configured to communicate with another device or communication network. The communication interface 1004 may include a wired communication interface, and may further include a wireless communication interface. The wired communication interface, for example, may be an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In a possible implementation, in an embodiment, the processor 1001 may include one or more CPUs, for example, a CPU 0 and a CPU 1 in FIG. 10.

In a possible implementation, in an embodiment, the hardware 1000 may include a plurality of processors, for example, the processor 1001 and a processor 1005 shown in FIG. 10. Each of the processors may be a single-CPU (single-CPU) processor or may be a multi-CPU (multi-CPU) processor. The processor herein may be one or more devices, circuits, and/or processing cores configured to process data (for example, computer program instructions).

When the hardware 1000 is configured as the cascading management platform 800, each functional module in the cascading management platform 800 is implemented by using software in the hardware 1000. In other words, the function module included in the cascading management platform 800 is generated after the processor in the hardware 1000 reads the program code stored in the memory. In some embodiments, the memory 1003 is configured to store program code 1010 of the solutions of this application, and the processor 1001 is configured to execute the program code 1010 stored in the memory 1003. In other words, the hardware 1000 may implement, by using the processor 1001 and the program code 1010 in the memory 1003, the method provided in the method embodiment in FIG. 4 or FIG. 6.

The processor 1001, the communication interface 1004, and the like in the hardware 1000 may implement functions of the devices in the foregoing method embodiments and/or various steps and methods implemented by the devices. For brevity, details are not described herein again.

When the hardware 1000 is configured as the site 900, each functional module in the site 900 is implemented by using software in the hardware 1000. In other words, the function module included in the site 900 is generated after the processor in the hardware 1000 reads the program code stored in the memory. In some embodiments, the memory 1003 is configured to store program code 1010 of the solutions of this application, and the processor 1001 is configured to execute the program code 1010 stored in the memory 1003. In other words, the hardware 1000 may implement, by using the processor 1001 and the program code 1010 in the memory 1003, the method provided in the method embodiment in FIG. 4 or FIG. 6.

The processor 1001, the communication interface 1004, and the like in the hardware 1000 may implement functions of the devices in the foregoing method embodiments and/or various steps and methods implemented by the devices. For brevity, details are not described herein again. The communication module 901 in the site 900 may be located in the communication interface 1004 in the hardware 1000. The invocation module 902 and the data synchronization module 903 may be located in the processor 1001 or the processor 1005 in the hardware 1000. Data in the invocation request and the data synchronization request may be stored in the memory 1003 in the hardware 1000.

This application further provides a multi-site cascading system, including a cascading management platform and a plurality of sites. The cascading management platform may be the cascading management platform 800 or 1000, and the site may be the site 900 or 1000. The cascading management platform and the plurality of sites may be configured to implement the method embodiment shown in FIG. 4 or FIG. 6.

In the foregoing embodiments, the descriptions of each embodiment have respective focuses. For a part that is not described in detail in a specific embodiment, refer to related descriptions of another embodiment.

All or some of the foregoing embodiments may be implemented by using software, hardware, or any combination thereof. When software is used to implement the embodiments, all or some of the embodiments may be implemented in a form of a computer program product. The computer program product may include code. When the computer program product is read and executed by a computer, some or all steps of the method recorded in the foregoing method embodiments may be implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium, a semiconductor medium, or the like.

Sequence adjustment, combination, or deletion may be performed on steps in the method in embodiments of this application according to an actual requirement. The units in the apparatus in embodiments of this application may be divided, combined, or deleted according to the actual requirement.

Embodiments of this application are described in detail above. The principle and implementation of this application are described herein by using specific examples. The descriptions about embodiments are merely provided to help understand the method and core ideas of this application. In addition, a person of ordinary skill in the art makes variations to the specific implementations and the application scope based on the idea of this application. Therefore, the content of this specification shall not be construed as a limitation on this application.

## Claims

1. A multi-site cascading system, comprising a first site and a second site, wherein
the first site is configured to receive, through a dedicated channel between the first site and the second site, an invocation request sent by the second site, and the invocation request indicates to invoke one or both of a first microservice and an application programming interface API in the first site;
the first site is further configured to invoke the one or both of the first microservice and the API based on the invocation request; and
the first site is further configured to send an invocation request response to the second site through the dedicated channel.

2. The multi-site cascading system according to claim 1, wherein the invocation request comprises one or both of a first microservice identifier and an API identifier, and a first site identifier, and the first microservice identifier, the API identifier, and the first site identifier are all dedicated identifiers in the multi-site cascading system.

3. The multi-site cascading system according to claim 1, wherein the invocation request comprises a uniform resource locator URL, and the URL indicates the first microservice or the API in the first site.

4. The multi-site cascading system according to any one of claims 1 to 3, wherein the multi-site cascading system further comprises a third site, wherein
the first site is further configured to receive, through a dedicated channel between the first site and the third site, a data synchronization request sent by the third site, wherein the data synchronization request comprises to-be-synchronized data, a second microservice identifier, and the first site identifier; and
the first site is further configured to synchronize the to-be-synchronized data based on the second microservice identifier, wherein the second microservice identifier is a dedicated identifier in the multi-site cascading system.

5. The multi-site cascading system according to any one of claims 1 to 4, wherein the multi-site cascading system further comprises a cascading management platform, and the dedicated channel between the first site and the second site and/or the dedicated channel between the first site and the third site are/is established according to an indication of the cascading management platform.

6. The multi-site cascading system according to claim 5, wherein the first site, the second site, the third site, and the cascading management platform are located in a same cloud data center or a plurality of cloud data centers; and when the first site, the second site, the third site, and the cascading management platform are located in the plurality of cloud data centers, one or any combination of the first site, the second site, the third site, and the cascading management platform is disposed in one of the plurality of cloud data centers.

7. An invocation method, comprising:
receiving, by a first site through a dedicated channel between the first site and a second site, an invocation request sent by the second site, wherein the invocation request indicates to invoke one or both of a microservice and an application programming interface API in the first site, and both the first site and the second site belong to a multi-site cascading system;
invoking, by the first site, the one or both of the microservice and the API based on the invocation request; and
sending, by the first site, an invocation request response to the second site through the dedicated channel.

8. The method according to claim 7, wherein the invocation request comprises one or both of a microservice identifier and an API identifier, and a first site identifier, and the microservice identifier, the API identifier, and the first site identifier are all dedicated identifiers in the multi-site cascading system.

9. The method according to claim 7, wherein the invocation request comprises a uniform resource locator URL, and the URL indicates the microservice or the API in the first site.

10. The method according to any one of claims 7 to 9, wherein the multi-site cascading system comprises a cascading management platform, and the dedicated channel is established according to an indication of the cascading management platform.

11. The method according to claim 10, wherein the first site, the second site, and the cascading management platform are located in a same cloud data center or a plurality of cloud data centers; and when the first site, the second site, and the cascading management platform are located in the plurality of cloud data centers, one or any combination of the first site, the second site, and the cascading management platform is disposed in one of the plurality of cloud data centers.

12. An invocation method, comprising:
receiving, by a first site through a dedicated channel between the first site and a second site, a data synchronization request sent by the second site, wherein the data synchronization request comprises to-be-synchronized data, a microservice identifier, and a first site identifier, and both the first site and the second site belong to a multi-site cascading system; and
synchronizing, by the first site, the to-be-synchronized data based on the microservice identifier, wherein both the microservice identifier and the first site identifier are dedicated identifiers in the multi-site cascading system.

13. The method according to claim 12, wherein the multi-site cascading system comprises a cascading management platform, and the dedicated channel is established according to an indication of the cascading management platform.

14. The method according to claim 13, wherein the first site, the second site, and the cascading management platform are located in a same cloud data center or a plurality of cloud data centers; and when the first site, the second site, and the cascading management platform are located in the plurality of cloud data centers, one or any combination of the first site, the second site, and the cascading management platform is disposed in one of the plurality of cloud data centers.

15. An invocation apparatus, comprising:
a communication module, configured to receive, through a dedicated channel between the first site and a second site, an invocation request sent by the second site, wherein the invocation request indicates to invoke one or both of a microservice and an application programming interface API in the first site, and both the first site and the second site belong to a multi-site cascading system; and
an invocation module, configured to invoke one or both of the microservice and the API based on the invocation request, wherein
the communication module is further configured to send an invocation request response to the second site through the dedicated channel.

16. The apparatus according to claim 15, wherein the invocation request comprises one or both of a microservice identifier and an API identifier, and a first site identifier, and the microservice identifier, the API identifier, and the first site identifier are all dedicated identifiers in the multi-site cascading system.

17. The apparatus according to claim 15, wherein the invocation request comprises a uniform resource locator URL, and the URL indicates the microservice or the API in the first site.

18. The apparatus according to any one of claims 15 to 17, wherein the multi-site cascading system comprises a cascading management platform, and the dedicated channel is established according to an indication of the cascading management platform.

19. An invocation apparatus, comprising:
a communication module, configured to receive, through a dedicated channel between the first site and a second site, a data synchronization request sent by the second site, wherein the data synchronization request comprises to-be-synchronized data, a microservice identifier, and a first site identifier, and both the first site and the second site belong to a multi-site cascading system; and
an invocation module, configured to synchronize the to-be-synchronized data based on the microservice identifier, wherein both the microservice identifier and the first site identifier are dedicated identifiers in the multi-site cascading system.

20. The apparatus according to claim 19, wherein the multi-site cascading system comprises a cascading management platform, and the dedicated channel is established according to an indication of the cascading management platform.

21. An invocation device, comprising a memory and a processor, wherein the memory is configured to store instructions, and the processor is configured to execute the instructions in the memory, so that the invocation device performs the following steps:
receiving, through a dedicated channel between the first site and a second site, an invocation request sent by the second site, wherein the invocation request indicates to invoke one or both of a microservice and an application programming interface API in the first site, and both the first site and the second site belong to a multi-site cascading system;
invoking the one or both of the microservice and the API based on the invocation request; and
sending an invocation request response to the second site through the dedicated channel.

22. An invocation device, comprising a memory and a processor, wherein the memory is configured to store instructions, and the processor is configured to execute the instructions in the memory, so that the invocation device performs the following steps:
receiving, through a dedicated channel between the first site and a second site, a data synchronization request sent by the second site, wherein the data synchronization request comprises to-be-synchronized data, a microservice identifier, and a first site identifier, and both the first site and the second site belong to a multi-site cascading system; and
synchronizing the to-be-synchronized data based on the microservice identifier, wherein both the microservice identifier and the first site identifier are dedicated identifiers in the multi-site cascading system.
